# EUROPEAN PATENT APPLICATION

(11) **EP 4 512 552 A1**
(43) Date of publication of application: **26.02.2025**
(21) Application number: 24195687.9
(22) Date of filing: 21.08.2024
(51) Int. Cl.: B22F 10/73, B22F 10/28, B22F 10/37, B22F 10/85, B22F 12/90, B33Y 40/00, B29C 64/153, B33Y 30/00, B29C 64/357, B33Y 10/00, B33Y 50/02, B29C 64/393

(54) **INSITU BUILD POWDER CHARACTERIZATION FOR POWDER BED FUSION**

(30) Priority: 21.08.2023 US 202318453071
(71) Applicant: RTX Corporation, Farmington, CT 06032 (US)
(72) Inventor: BINEK, Lawrence A., East Hartford, 06118 (US); OTT, Joseph E., East Hartford, 06118 (US); SIROIS, Dean R., East Hartford, 06118 (US); BOYER, Jesse R., East Hartford, 06118 (US); GARDELL, Benjamin G., East Hartford, 06118 (US); BENNETT, Michael Walter, East Hartford, 06118 (US); CADAR, Alexandru, East Hartford, 06118 (US)
(74) Representative: Dehns

(57) **Abstract**

A build powder characterization system (42) for an additive manufacturing (AM) machine includes a build powder collection system (44), a build powder analyzer (50), and a controller (32). The build powder collection system (44) configured to collect build powder during an AM machine build campaign. The build powder analyzer (50) configured to receive from the build powder collection system (44) the collected build powder, to analyze selected build powder properties, and to communicate to a controller (32) data reflecting properties of the collected build powder. The controller (32) is configured to process data, received from the build powder analyzer (50), reflecting properties of the collected build powder.

## Description

### BACKGROUND

The present disclosure relates generally to powder bed fusion additive machines and, more particularly, to build powder characterization for a powder bed fusion additive machine.

Powder bed fusion (PBF) additive manufacturing is an additive manufacturing, or 3-D printing, technology that uses an energy source, such as a laser (PBF-LB) or electron beam (PBF-EB), to sinter or fuse metallic or polymeric particles together in a layer-by-layer process. PBF is typically used as an industrial process to make near net shape parts. Some PBF processes sinter the build powder particles, while others melt and fuse the build powder particles. PBF-LB is also known as direct metal laser sintering (DMI,S).

PBF additive manufacturing machines rely on a build powder coater to distribute fresh build powder onto a build powder bed during a build campaign. The build powder coater is supplemented by a recoater assembly that creates an even distribution of build powder on the build powder bed. Ensuring consistent build powder properties is an important aspect of building defect-free parts using PBF techniques.

### SUMMARY

One aspect of this disclosure is directed to a build powder characterization system for an additive manufacturing (AM) machine that includes a build powder collection system, a build powder analyzer, and a controller. The build powder collection system configured to collect build powder during an AM machine build campaign. The build powder analyzer configured to receive from the build powder collection system the collected build powder, to analyze selected build powder properties, and to communicate to a controller data reflecting properties of the collected build powder. The controller is configured to process data, received from the build powder analyzer, reflecting properties of the collected build powder.

Another aspect of the disclosure is directed to a method of operating a build powder characterization system for an AM. A build powder collection system collects build powder during an AM machine build campaign. A build powder analyzer receives build powder from the build powder collection system and analyzes selected properties of collected build powder. The build powder analyzer communicates data reflecting properties of the collected build powder to a controller. The controller processes the data, received from the build powder analyzer, reflecting properties of the collected build powder.

### BRIEF DESCRIPTION OF THE DRAWINGS

Fig. 1 is a schematic of an exemplary laser powder bed fusion (PBF-LB) additive manufacturing system.
Fig 2 is a depiction of a part made on a PBF-LB system.
Fig. 3A is an overhead view of a PBF-LB system showing a first view of a build powder characterization system.
Fig. 3B is an overhead view of a PBF-LB system showing a second view of a build powder characterization system.

### DETAILED DESCRIPTION

Laser powder bed fusion (PBF-LB) additive manufacturing (AM) and the similar electron beam powder bed fusion (PBF-EB) AM process are options to make near net shape parts. PBF-LB and PBF-EB AM machines include a recoater assembly to create an even distribution of build powder on the build powder bed to facilitate effective fabrication of parts. Ensuring consistent build powder properties is an important aspect of building defect-free parts using PBF techniques. Among the attributes important to consistent build powder properties are powder chemistry and particle size and shape distribution.

While maintaining consistent build powder properties has always been an important quality control measure for PBF processes, the challenges of doing so have increased with the adoption of large format PBF machines that are used for large scale build campaigns to make large parts or a large number of parts in a single build campaign. In some examples, large scale build campaigns can run for 30 days or longer. Such build campaigns can be significantly impacted by variation in build powder properties over the course of the build campaign. For example, if build powder properties fall out of specification over the course of a build campaign, the part(s) made during the build campaign may require significant rework or may even have to be scrapped.

The present disclosure is directed to an insitu build powder characterization system for use with powder bed fusion machines. The build powder characterization system collects build powder at selected intervals over the course of a build campaign and analyzes the collected build powder to determine whether key build powder properties remain within specification.

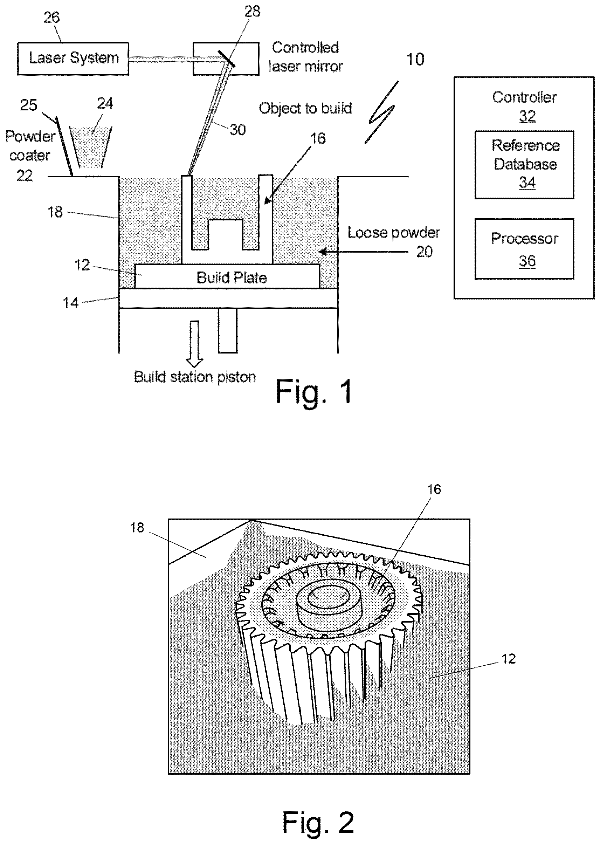

Fig. 1 is a schematic of an exemplary, non-limiting PBF-LB system **10.** While this disclosure is applicable to all PBF systems, including PBF-LB and PBF-EB systems, the exemplary, non-limiting PBF-LB system **10** is used to describe the system and method of the disclosure. A typical PBF-LB system **10** includes a build plate **12,** a build station piston **14** that adjusts the height of the build plate **12,** a part or part **16** that is built on top of the build plate **12,** a powder chamber **18** to contain loose, and unconsolidated build powder **20** that surrounds the part **16.** A typical PBF-LB system **10** also includes a powder coater **22** that distributes additional build powder **24** over the part **16** after completion of each layer formed on the part **16.** A recoater blade **25** follows the powder coater **22** as it distributes additional build powder **24** to create an even layer of consolidated built powder **20.** The recoater blade **25** can be made from silicone, polyurethane, rubber, or other elastomeric materials. A laser system **26** combined with a controlled laser mirror **28** directs a laser beam **30** onto loose build powder **20** to form a melt pool (not shown) that, when solidified, forms a layer of the part **16.** As each layer of the part **16** is formed, the build station piston **14** lowers the built plate **12** and part **16** by a predetermined distance that corresponds to the desired thickness of the next layer of the part **16.** The powder coater **22** then moves across the top of the loose build powder **20** to distribute a layer of additional build powder **24** that will then be consolidated with the laser beam **30** to form the next layer of the part **16.**

Controller **32** controls the height of the build plate **12** by moving the build station piston **14,** which in turn controls the thickness of each layer of the part **16.** Controller **32** also controls the movement of the powder coater **22** as it distributes additional build powder **24** and the movement of the laser beam **30** as it forms the melt pool that consolidates loose build powder **20** to form each layer of the part **16.** For example, the controller **32** controls PBF-LB system **10** operating parameters, including:
(1) laser beam power, laser beam velocity, and laser beam spot size, build plate temperature, and layer thickness;
(2) temperature-dependent thermophysical properties of the powder;
(3) feedstock properties including average powder particle size; and
(4) laser hatching strategy including hatch distance, hatch delay time, and stripe width.

Controller **32** typically includes a reference database **34** and processor **36.** Reference database **34** contains processing data relevant to the PBF-LB system **10,** build powder to be used to produce the part **16,** and the specific work piece **16** to be produced. Processor **36** contains programming to interface with the reference database **34** to control the PBF-LB system **10** to products parts, such as part **16,** as is known to a person of ordinary skill in the art. Part **16** can be a near-net-shaped part (i.e., initial production of the part that is very close to the final (net) shape).

The PBF-LB system **10** can be used with a variety of build powders to produce part **24.** For example the powder can be a metal powder or polymeric powder. Metallic powders compatible with typical PBF-LB systems **10** include aluminum, aluminum alloys (e.g., aluminum-lithium alloys), titanium, nickel, nickel alloys, and other metals and alloys known in the art. Polymeric powders compatible with typical PBF-LB systems **10** include a wide variety of polymers as known in the art.

Fig. 2 is a depiction of a part **16** made on PBF-LB system **10.** Fig. 2 also shows powder chamber **18** that contains loose and unconsolidated build powder **20** remaining after the build operation used to make part **16.** The present disclosure is directed to insitu build powder characterization to determine whether build powder used during a build campaign remains within specification to build defect-free parts using PBF techniques for current and subsequent build campaigns.

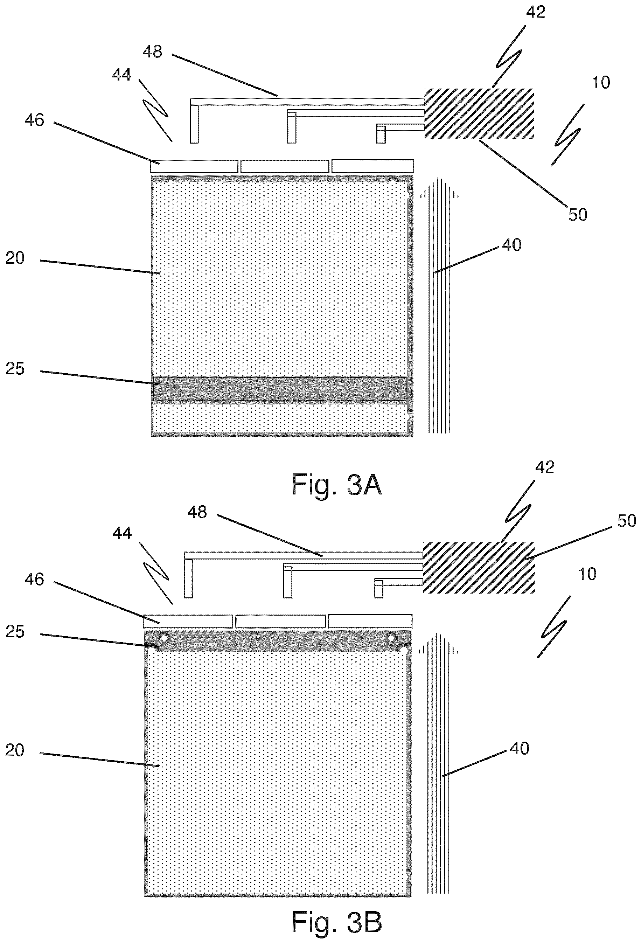

Figs. 3A and 3B are an overhead views of a PBF-LB system **10** showing a first view of a build powder characterization system **42.** The PBF-LB system **10** includes unconsolidated build powder **20** shown as a build powder bed **20.** The recoater blade **25** maintains an even distribution of build powder on the build powder bed **20,** moving in recoater direction **40** from a first position as shown in Fig. 3A to a second position as shown in Fig. 3B. In moving from the first position (Fig. 3A) to the second position (Fig. 3B), the recoater pushes excess build powder from the build powder bed **20** into build powder collection system **44** having one or more build powder trenches **46,** which is then conveyed through build powder conveyor **48** to a build powder analyzer **50.** While the build powder collection system **44** is shown in Figs. 3A/3B as having build powder trenches **46** and build powder conveyor **48,** a person of ordinary skill will recognize that many other potential configurations for the build powder collection system **44** are possible. If desirable, build powder collected in the build powder collection system **44** can be screened or filtered before being received by the build powder analyzer **50.** Such screening or filtering can be done with any conventional powder screening devices and can be performed at any stage before, during, or after collection in the build powder collection system **44.**

The build powder analyzer **50** may be configured to analyze selected build powder properties including build powder chemistry and particle size and shape distribution. Particle size and shape distribution can be assessed using any appropriate devices, including laser diffraction. One such device is Morphologi 4-ID particle analyzer, which is available from Malvern Panalytical, Malvern, United Kingdom. Similar systems are available from a number of other providers.

Similarly, the build powder analyzer **50** can assess build powder chemistry using any appropriate devices, including x-ray fluorescence devices, inductively coupled plasma mass spectrometry devices, combustion devices, and other devices. Some such devices may be commercially available. Other such devices may be custom built for a particular application. For example, Olympus Corporation sells a range of X-ray fluorescence analyzers that may be appropriate for use with a build powder characterization system **42** of this disclosure. Other build powder chemistry analysis devices are available from other providers.

The build powder analyzer **50** is configured to communicate to a controller that stores data reflecting properties of the collected build powder, including one or more of build powder chemistry, particle size distribution, and particle shape distribution. The controller may be the controller **32** discussed above or another controller connected to or remote from the PBF-LB system **10.**

Depending on the application, it may be desirable for the build powder characterization system **42** to operate with a turnaround time equivalent to one or more recoat cycles, so build powder can be analyzed frequently during the course of a build campaign. For example, build powder can be captured and analyzed during or after each recoat cycle. Analyzing the build powder frequently permits changes in build powder to track over time so that trends can be assessed. Build powder property trending can be performed manually or automatically and can be compared to an index to determine if build powder remains within specification. Build powder property trending can also be used to predict future changes in build powder properties. For example, build powder trending can be performed by the controller **32** or another controller connected to or remote from the PBF-LB system **10,** which can be configured to determine one or more trends based on data received from the build powder analyzer, reflecting properties of the collected build powder. In particular, the controller can be configured to take an action if it determines that a trend reflecting at least one property of the collected build powder indicates that the collected build powder is likely to go out of specification. The action the controller takes if it determines that a trend reflecting at least one property of the collected build powder indicates that the collected build powder is likely to go out of specification can include one or more of notifying an operator to take corrective action, commanding the powder coater **22** to dispense build powder known to be in specification, and terminating a build campaign. Supplementing or replacing build powder fed to the powder coater **22** can slow or reverse the rate of degradation of build powder properties and can result in build powder remaining within specification for the current or subsequent build campaigns. Changes in the rate of degradation of build powder properties can be assessed by the build powder characterization system **42** during subsequent recoat cycles. The controller can take other actions as well if such other actions are deemed appropriate for a particular AM machine.

The disclosed insitu build powder characterization system **42** provides continuous in-process assessment of build powder properties to help keep build powder within specification during a build campaign. Keeping build powder properties within specification over the course of a build campaign, decreases the likelihood that the part(s) made during the build campaign will require significant rework or have to be scrapped. The insitu build powder characterization system **42** can lower the cost of making parts with an AM process by allowing its user to extract the highest number of "in-spec" parts from a build campaign.

### Discussion of Possible Embodiments

The following are non-exclusive descriptions of possible embodiments of the present invention.

A build powder characterization system for an additive manufacturing (AM) machine comprises a build powder collection system configured to collect build powder during an AM machine build campaign and a build powder analyzer configured to receive from the build powder collection system the collected build powder, to analyze selected build powder properties, and to communicate to a controller data reflecting properties of the collected build powder. The controller is configured to process data, received from the build powder analyzer, reflecting properties of the collected build powder.

The build powder characterization system for an AM machine of the preceding paragraph can optionally include any one or more of the following features, configurations and/or additional elements:
The build powder characterization system for an AM machine of the preceding paragraph, further comprising a recoater blade configured to push excess build powder on a build powder bed into the build powder collection system during a recoat cycle.

The build powder characterization system for an AM machine of any of the preceding paragraphs, wherein the collected build powder is screened or filtered before being received by the build powder analyzer.

The build powder characterization system for an AM machine of any of the preceding paragraphs, wherein the build powder analyzer is configured to analyze the particle size distribution or the particle shape distribution or both of the collected build powder.

The build powder characterization system for an AM machine of any of the preceding paragraphs, wherein the build powder analyzer is configured to analyze the chemistry of the collected build powder.

The build powder characterization system for an AM machine of the preceding paragraph, wherein the build powder analyzer is configured to analyze the chemistry of the collected build powder.

The build powder characterization system for an AM machine of any of the preceding paragraphs, wherein the controller is configured to determine one or more trends based on data, received from the build powder analyzer, reflecting properties of the collected build powder.

The build powder characterization system for an AM machine of the preceding paragraph, wherein the controller is configured to take an action if it determines that a trend reflecting at least one property of the collected build powder indicates that the collected build powder is likely to go out of specification.

The build powder characterization system for an AM machine of the preceding paragraph, wherein the action the controller takes if it determines that a trend reflecting at least one property of the collected build powder indicates that the collected build powder is likely to go out of specification includes one or more of notifying an operator to take corrective action, commanding a powder coater to dispense build powder known to be in specification, and terminating a build campaign.

The build powder characterization system for an AM machine of any of the preceding paragraphs, wherein the additive manufacturing machine is a powder bed fusion additive manufacturing machine.

A method of operating a build powder characterization system for an AM machine comprising collecting, during an AM machine build campaign, build powder using a build powder collection system; receiving, by a build powder analyzer, build powder from the build powder collection system; analyzing, by the build powder analyzer, selected properties of collected build powder; communicating, by the build powder analyzer, data reflecting properties of the collected build powder to a controller; and processing, by the controller, the data, received from the build powder analyzer, reflecting properties of the collected build powder.

The method of the preceding paragraph can optionally include any one or more of the following features, configurations and/or additional elements:
The method of the preceding paragraph, further comprising pushing, by a recoater blade, excess build powder on a build powder bed into the build powder collection system during a recoat cycle.

The method of any of the preceding paragraphs, further comprising screening or filtering the collected build powder before the collected build powder is received by the build powder analyzer.

The method of any of the preceding paragraphs, wherein the build powder analyzer is configured to analyze the particle size distribution or the particle shape distribution or both of the collected build powder.

The method of any of the preceding paragraphs, wherein the build powder analyzer is configured to analyze the chemistry of the collected build powder.

The method of the preceding paragraph, wherein the build powder analyzer is configured to analyze the chemistry of the collected build powder.

The method of any of the preceding paragraphs, wherein the controller is configured to determine one or more trends based on data, received from the build powder analyzer, reflecting properties of the collected build powder.

The method of the preceding paragraph, wherein the controller is configured to take an action if it determines that a trend reflecting at least one property of the collected build powder indicates that the collected build powder is likely to go out of specification.

The method of the preceding paragraph, wherein the action the controller takes if it determines that a trend reflecting at least one property of the collected build powder indicates that the collected build powder is likely to go out of specification includes one or more of notifying an operator to take corrective action, commanding a powder coater to dispense build powder known to be in specification, and terminating a build campaign.

The method of any of the preceding paragraphs, wherein the additive manufacturing machine is a powder bed fusion additive manufacturing machine.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A build powder characterization system (42) for an additive manufacturing (AM) machine (10) comprising:
a build powder collection system (44) configured to collect build powder during an AM machine build campaign;
a build powder analyzer (50) configured to receive from the build powder collection system (44) the collected build powder, to analyze selected build powder properties, and to communicate to a controller (32) data reflecting properties of the collected build powder; and
wherein the controller (32) is configured to process data, received from the build powder analyzer (50), reflecting properties of the collected build powder.

2. The build powder characterization system (42) of claim 1, further comprising a recoater blade (25) configured to push excess build powder on a build powder bed (20) into the build powder collection system (44) during a recoat cycle.

3. The build powder characterization system (42) of claim 1 or 2, wherein the collected build powder is screened or filtered before being received by the build powder analyzer (50).

4. The build powder characterization system (42) of claim 1, 2 or 3 wherein the build powder analyzer (50) is configured to analyze the particle size distribution or the particle shape distribution or both of the collected build powder.

5. The build powder characterization system (42) of any preceding claim, wherein the build powder analyzer (50) is configured to analyze the chemistry of the collected build powder.

6. A method of operating a build powder characterization system (42) for an additive manufacturing (AM) machine (10) comprising:
collecting, during an AM machine build campaign, build powder using a build powder collection system (44);
receiving, by a build powder analyzer (50), build powder from the build powder collection system (44);
analyzing, by the build powder analyzer (50), selected properties of collected build powder;
communicating, by the build powder analyzer (50), data reflecting properties of the collected build powder to a controller (32); and
processing, by the controller (32), the data, received from the build powder analyzer (50), reflecting properties of the collected build powder.

7. The method of claim 6, further comprising pushing, by a recoater blade (25), excess build powder on a build powder bed (20) into the build powder collection system (44) during a recoat cycle.

8. The method of claim 6 or 7, further comprising screening or filtering the collected build powder before the collected build powder is received by the build powder analyzer (50).

9. The method of claim 6, 7 or 8, wherein the build powder analyzer (50) is configured to analyze the particle size distribution or the particle shape distribution or both of the collected build powder.

10. The method of any of claims 6 to 9, wherein the build powder analyzer (50) is configured to analyze the chemistry of the collected build powder.

11. The build powder characterization system (42) or method of any preceding claim, wherein the controller (32) is configured to determine one or more trends based on data, received from the build powder analyzer (50), reflecting properties of the collected build powder.

12. The build powder characterization system (42) or method of claim 11, wherein the controller (32) is configured to take an action if it determines that a trend reflecting at least one property of the collected build powder indicates that the collected build powder is likely to go out of specification.

13. The build powder characterization system (42) or method of claim 12, wherein the action the controller (32) takes if it determines that a trend reflecting at least one property of the collected build powder indicates that the collected build powder is likely to go out of specification includes one or more of notifying an operator to take corrective action, commanding a powder coater (22) to dispense build powder known to be in specification, and terminating a build campaign.

14. The build powder characterization system (42) or method of any preceding claim, wherein the additive manufacturing machine (10) is a powder bed fusion additive manufacturing machine.
